# EUROPEAN PATENT APPLICATION

(11) **EP 4 819 213 A1**
(43) Date of publication of application: **07.10.2026**
(21) Application number: 24897326.5
(22) Date of filing: 15.11.2024
(51) Int. Cl.: H01M 4/13, H01M 4/36, H01M 4/38, H01M 4/133, H01M 4/587, H01M 10/052, H01M 10/0587

(54) **NONAQUEOUS ELECTROLYTE SECONDARY BATTERY**

(30) Priority: 28.11.2023 JP 2023200351
(71) Applicant: Panasonic Intellectual Property Management Co., Ltd., Kadoma-shi, Osaka 571-0057 (JP)
(72) Inventor: KIDA, Tatsuya, Osaka 571-0057 (JP); TANI ,Yuji, Osaka 571-0057 (JP); OTA, Keisuke, Osaka 571-0057 (JP)
(74) Representative: Eisenführ Speiser
(86) International application number: PCT/JP2024/040566
(87) International publication number: WO 2025/115639

(57) **Abstract**

The present invention provides a highly reliable nonaqueous electrolyte secondary battery in which the occurrence of an internal short circuit is suppressed. A nonaqueous electrolyte secondary battery according to one embodiment of the present disclosure includes: a wound electrode body which is obtained by winding a belt-shaped positive electrode and a belt-shaped negative electrode, with a separator being interposed therebetween; and an outer package which houses the electrode body. The positive electrode has a positive electrode current collector and a positive electrode mixture layer that is formed on the surface of the positive electrode current collector. The positive electrode mixture layer has, in the central part of the winding termination end in the short-side direction of the positive electrode, a recess that is recessed toward the winding start end side relative to the both edges of the winding termination end in the short-side direction of the positive electrode.

## Description

### TECHNICAL FIELD

The present disclosure relates to non-aqueous electrolyte secondary batteries, and more particularly relates to a non-aqueous electrolyte secondary battery comprising a wound electrode assembly.

### BACKGROUND ART

Conventionally, non-aqueous electrolyte secondary batteries have widely been used, in which a wound electrode assembly formed by winding a strip-shaped positive electrode and negative electrode is housed in an outer casing. In the secondary batteries having the wound electrode assembly housed in the outer casing, a large stress may be applied to the vicinity of a winding terminal end of a positive electrode mixture layer due to expansion of a negative electrode during charging, which may cause damage on a separator that faces the winding terminal end of the positive electrode mixture layer, resulting in an internal short circuit. Patent Literature 1 discloses a technology to coat a region around the winding terminal end of the positive electrode mixture layer with a heat-resistant insulating tape in order to restrain the damage of the separator.

### CITATION LIST

### PATENT LITERATURE

PATENT LITERATURE 1: Japanese Unexamined Patent Application Publication No. 2013-73794

### SUMMARY

The electrode assembly expands by a repeated charge and discharge cycle, and a central portion of the electrode assembly in an axial direction in particular expands significantly as compared to both end portions. Therefore, in the winding terminal end of the positive electrode mixture layer, the stress applied to the central portion of the positive electrode in a short-side direction is larger than the stress applied to the both end portions of the positive electrode in the short-side direction. The technology disclosed in Patent Literature 1 does not take into account the large stress applied to the central portion of the positive electrode mixture layer at the winding terminal end. In addition, in the technology disclosed in Patent Literature 1, the winding terminal end of the positive electrode mixture layer is coated with the heat-resistant insulating tape, which may increase the stress applied to the winding terminal end of the positive electrode mixture layer and therefore, there is still room for improvement.

It is an advantage of the present invention to provide a highly reliable non-aqueous electrolyte secondary battery, in which occurrence of an internal short circuit is restrained.

A non-aqueous electrolyte secondary battery in one aspect of the present disclosure comprises: a wound electrode assembly having a strip-shaped positive electrode and negative electrode wound with a separator in between; and an outer casing that houses the electrode assembly, in which the positive electrode includes a positive electrode current collector and a positive electrode mixture layer formed on a surface of the positive electrode current collector, and the positive electrode mixture layer has a recessed portion in a central portion of a winding terminal end in a short-side direction of the positive electrode, the recessed portion being recessed toward a winding start end side more than both end portions of the winding terminal end in the short-side direction of the positive electrode.

According to the non-aqueous electrolyte secondary battery according to the present disclosure, it is possible to restrain an internal short circuit caused by damage on the separator that faces the winding terminal end of the positive electrode mixture layer.

### BRIEF DESCRIPTION OF DRAWING

FIG. 1 is an axial sectional view of a cylindrical secondary battery as one example of an embodiment.
FIG. 2 is a perspective view of a wound electrode assembly comprised in the secondary battery shown in FIG. 1.
FIG. 3 is a front view showing in an expanded state a positive electrode and a negative electrode that constitute the electrode assembly according to one example of the embodiment.
FIG. 4 is an enlarged view of the vicinity of a winding terminal end of the positive electrode shown in FIG. 3.
FIG. 5 is a view corresponding to FIG. 4 in another example of the embodiment.

### DESCRIPTION OF EMBODIMENTS

Hereinafter, one example of an embodiment of a cylindrical secondary battery according to the present disclosure will be described in detail with reference to the drawings. In the following description, specific shapes, materials, numerical values, directions, or the like, are examples for easy understanding of the present disclosure, and they can be appropriately changed in accordance with the specifications of the cylindrical secondary battery. Moreover, when a plurality of embodiments or modifications are included in the following description, it is assumed from the beginning that their characteristic portions are combined and used as appropriate.

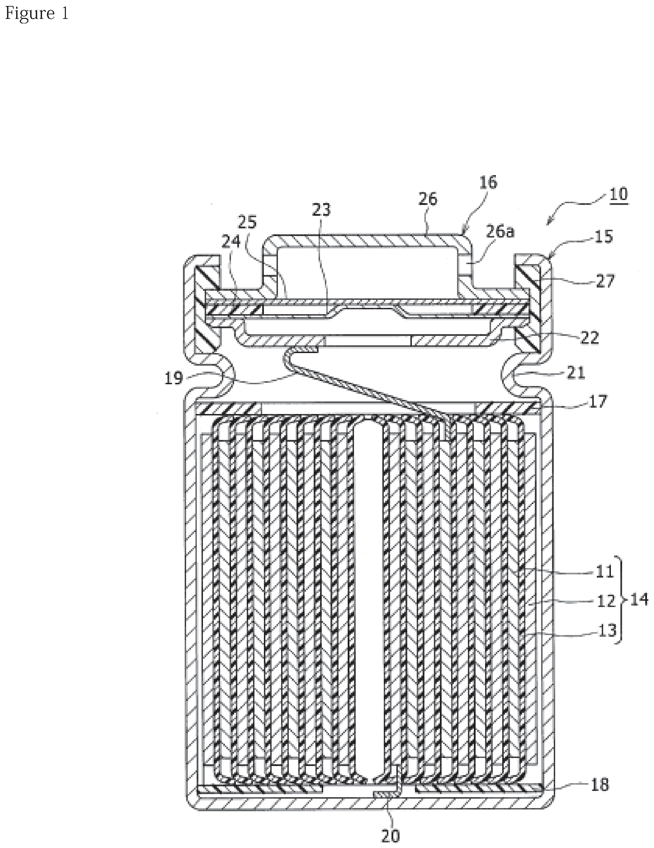

FIG. 1 is an axial sectional view of a cylindrical secondary battery 10 as one example of the embodiment. In the secondary battery 10 shown in FIG. 1, an electrode assembly 14 and non-aqueous electrolyte (not shown) are housed in an outer casing 15. The electrode assembly 14 has a wound structure in which a positive electrode 11 and negative electrode 12 are wound with a separator 13 in between. As a non-aqueous solvent (organic solvents) of the non-aqueous electrolyte, there may be used carbonates, lactones, ethers, ketones, esters, or the like, and two or more of these solvents can be mixed and used. When two or more of these solvents are mixed and used, a mixed solvent containing cyclic carbonates and chain carbonates is preferably used. Examples of the cyclic carbonates to be used may include ethylene carbonate (EC), propylene carbonate (PC), and butylene carbonate (BC), and examples of the chain carbonates to be used may include dimethylcarbonate (DMC), ethylmethylcarbonate (EMC), and diethylcarbonate (DEC). As electrolyte salt of the non-aqueous electrolyte, LiPF₆, LiBF₄, LiCF₃SO₃, or the like and mixtures of these may be used. The amount of electrolyte salt dissolved in the non-aqueous solvent may be, for example, greater than or equal to 0.5 mol/L and less than or equal to 2.0 mol/L. Hereinafter, for the convenience of description, the side of a sealing assembly 16 is defined as "upper side", and a bottom side of the outer casing 15 is defined as "lower side".

The inside of the secondary battery 10 is sealed by closing an opening portion of the outer casing 15 with the sealing assembly 16. Insulating plates 17 and 18 are provided above and below the electrode assembly 14, respectively. A positive electrode tab 19 extends upward through a through-hole of the insulating plate 17 and is welded to the lower surface of a filter 22, which is a bottom plate of the sealing assembly 16. In the secondary battery 10, a cap 26, which is the top plate of the sealing assembly 16 electrically connected with the filter 22, serves as a positive electrode terminal. On the other hand, a negative electrode tab 20 extends toward a bottom of the outer casing 15 through a through-hole of the insulating plate 18, and is welded to the inner surface of the bottom of the outer casing 15. In addition, the negative electrode 12 is located on the outermost circumferential surface of the electrode assembly 14, the negative electrode 12 being in contact with the outer casing 15. In the secondary battery 10, the outer casing 15 serves as a negative electrode terminal.

The outer casing 15 is, for example, a metallic outer casing in a bottomed cylindrical shape. Between the outer casing 15 and the sealing assembly 16, a gasket 27 is provided to ensure sealability of the inside of the secondary battery 10. The outer casing 15 includes a grooved portion 21 formed by, for example, pressing a side surface portion from outside to support the sealing assembly 16. The grooved portion 21 is preferably formed in an annular shape along a circumferential direction of the outer casing 15 to support the sealing assembly 16 with its upper surface.

The sealing assembly 16 includes the filter 22, a lower vent member 23, an insulating member 24, an upper vent member 25, and the cap 26 stacked in this order from the side of the electrode assembly 14. Each member constituting the sealing assembly 16 has, for example, a disc shape or a ring shape, and each member except the insulating member 24 is electrically connected to each other. The lower vent member 23 and the upper vent member 25 are connected to each other at their respective center portions with the insulating member 24 interposed between their respective circumferential edge portions. When the internal pressure of the battery rises due to abnormal heat generation, the lower vent member 23 breaks, for example, and this causes the upper vent member 25 to swell toward the cap 26 and be separated from the lower vent member 23, so that the electrical connection between both members is cut off. As the internal pressure further rises, the upper vent member 25 breaks, so that gas is exhausted through an opening portion 26a of the cap 26.

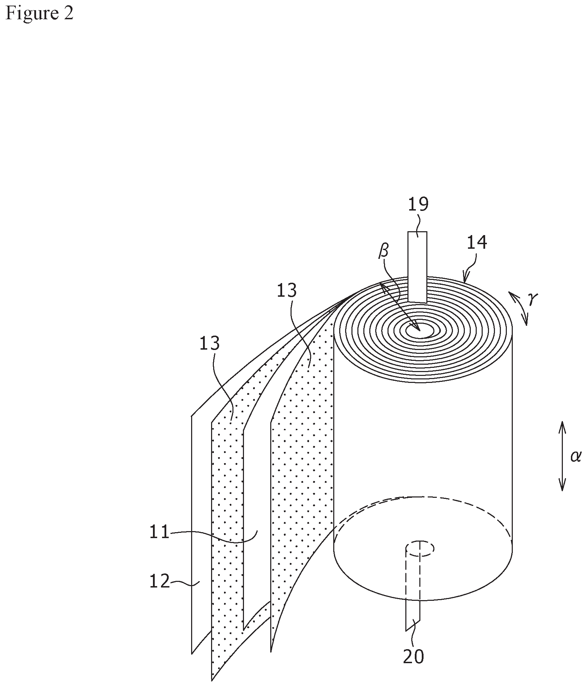

Description is now given of the electrode assembly 14 with reference to FIG. 2. FIG. 2 is a perspective view of the electrode assembly 14. The electrode assembly 14 has a winding structure in which the positive electrode 11 and the negative electrode 12 are wound in a spiral shape through the separator 13 as described above. The positive electrode 11, the negative electrode 12, and the separator 13 are all formed into a strip shape and spirally wound around a winding axis so as to be stacked alternately in a radial direction of the electrode assembly 14. Two separators 13 are formed with a dimension that is at least slightly larger than the positive electrode 11 and are arranged to hold the positive electrode 11 therebetween, for example.

As the separator 13, for example, a porous sheet with ion permeability and insulation properties is used. Specific examples of the porous sheet may include microporous thin films, woven fabrics, and non-woven fabrics. As the materials of the separator, olefin resin such as polyethylene and polypropylene, cellulose, and the like are preferable. The separator 13 may be a laminate having a cellulose fiber layer and a thermoplastic resin fiber layer made of olefin resin or the like. The separator 13 may be a multi-layer separator including a polyethylene layer and a polypropylene layer, and may also have a material, such as aramid resin and ceramic, coated on the surface thereof.

In the radial direction β, the side of the winding axis is referred to as a winding inner side, and its opposite side is referred to as a winding outer side. In the electrode assembly 14, the longitudinal direction of the positive electrode 11 and the negative electrode 12 is a winding direction γ, and the width direction of the positive electrode 11 and the negative electrode 12 is an axial direction α. In the winding direction γ, the end of the positive electrode 11 and the negative electrode 12 on the side of the winding axis is referred to as a winding start end, and the end on its opposite side is referred to as a winding terminal end. Both ends of the winding direction γ of a current collector and a mixture layer, which will be described later, are also similarly referred to as a winding start end and a winding terminal end. At the upper end of the electrode assembly 14, the positive electrode tab 19 extends in the axial direction α from substantially the center in a radial direction extending from the center to the outermost circumference of the electrode assembly 14. At the lower end of the electrode assembly 14, the negative electrode tab 20 extends in the axial direction α from the vicinity of the winding axis.

The electrode assembly 14 may be housed in the outer casing 15 with a fixing tape attached so as to cover at least some region of the winding terminal end of the negative electrode 12, which is exposed to the outermost circumferential surface. For example, the fixing tape is attached on both ends in the axial direction α on the outermost circumferential surface of the electrode assembly 14. In this case, an axial central portion of the electrode assembly 14 is more likely to expand due to charging and discharging, so that the effect of the present disclosure, which will be described later, becomes more pronounced.

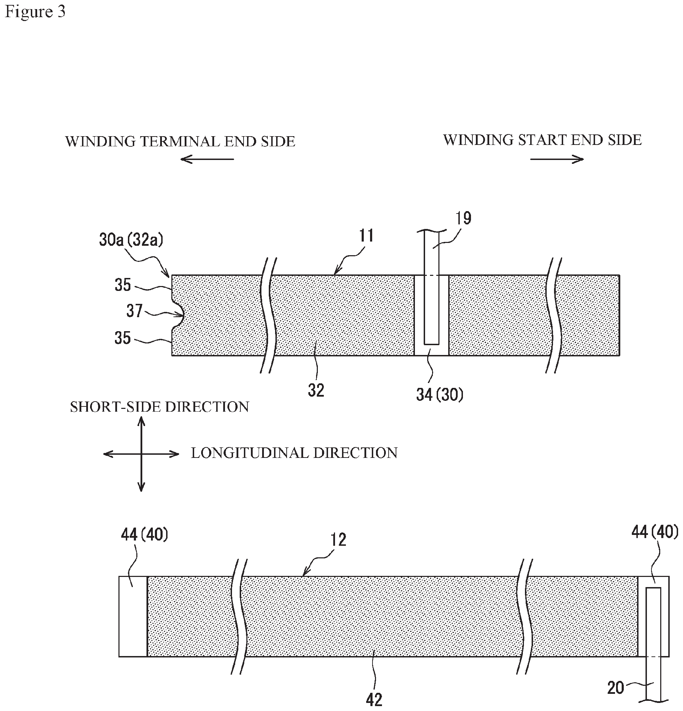

A detailed description is now given of the positive electrode 11 and the negative electrode 12 with reference to FIGS. 3 to 5. FIG. 3 is a front view showing in an expanded state the positive electrode 11 and the negative electrode 12 that constitute the electrode assembly 14 according to one example of the embodiment. In order to prevent lithium deposition, the negative electrode 12 is formed with a dimension that is slightly larger than the positive electrode 11. Specifically, the negative electrode 12 is formed to be longer in the short-side direction and the longitudinal direction than the positive electrode 11.

The positive electrode 11 includes a strip-shaped positive electrode current collector 30 and a positive electrode mixture layer 32 formed on the surface of the positive electrode current collector 30. Examples of the positive electrode current collector 30 to be used include a foil of metal such as aluminum or a film with the metal arranged on the surface thereof. The preferable positive electrode current collector 30 is a metal foil having aluminum or aluminum alloy as a main component. The positive electrode current collector 30 has a thickness of, for example, greater than or equal to 10 µm and less than or equal to 30 µm.

Examples of the positive electrode mixture layer 32 contain a positive electrode active material, a conductive agent, and a binding agent. The positive electrode 11 is fabricated by applying a positive electrode mixture slurry containing a positive electrode active material, a conductive agent, a binding agent, and a solvent such as N-methyl-2-pyrrolidone (NMP) to both surfaces of the positive electrode current collector 30 and then drying and rolling it.

Examples of the positive electrode active material to be used may include lithium-containing transition metal oxides, containing transition metal elements such as Co, Mn, and Ni. Although the lithium-containing transition metal oxides are not particularly limited, they are preferably compound oxides expressed by a general formula Li_{1 + x}MO₂ (in which -0.2 < x ≤ 0.2, where M includes at least one of the group consisting of Ni, Co, Mn, and Al).

As the conductive agent contained in the positive electrode mixture layer 32, there may be used, for example, acetylene black (AB), carbon black (CB) such as ketjen black, and carbon materials such as graphite. As the binding agent contained in the positive electrode mixture layer 32, there may be used, for example, fluororesin such as polytetrafluoroethylene (PTFE), and polyvinylidene difluoride (PVDF), polyacrylonitrile (PAN), polyimide (PI), acrylic resin, and polyolefin resin. These resins may be used together with carboxymethylcellulose (CMC) or its salts, polyethylene oxide (PEO), or the like. Any one of these materials may be used independently, or two or more of these materials may be used combinedly.

On the surface of the positive electrode 11, a positive electrode current collector exposed portion 34 is formed that is a portion where the positive electrode current collector 30 is exposed, the positive electrode current collector exposed portion 34 being connected to the positive electrode tab 19. The positive electrode current collector exposed portion 34, which is the surface of the positive electrode current collector 30 not covered with the positive electrode mixture layer 32, is provided, for example, by intermittent application in which the positive electrode mixture slurry is not applied to some region of the positive electrode current collector 30. The positive electrode current collector exposed portion 34 is suitably provided on both the surfaces of the positive electrode 11 so that the positive electrode current collector exposed portion 34 overlaps the positive electrode 11 in the thickness direction. The positive electrode tab 19 is joined to the positive electrode current collector exposed portion 34, for example, by ultrasonic welding.

In the present embodiment, the positive electrode current collector exposed portion 34 is provided over the entire length of the short-side direction at substantially the center of the positive electrode 11 in the longitudinal direction. Although the position of the positive electrode current collector exposed portion 34 is not limited to the position in this example, the positive electrode current collector exposed portion 34 is preferably provided at the position that is substantially the same distance from the winding start end and the winding terminal end of the positive electrode from the viewpoint of current collectability. In addition, the plurality of positive electrode current collector exposed portions 34 may be formed on the surface of the positive electrode 11, with the positive electrode tab 19 being connected to each of the positive electrode current collector exposed portions 34.

As described in detail later, the positive electrode mixture layer 32 has a recessed portion 37 in a central portion of a winding terminal end 32a of the positive electrode mixture layer 32 in the short-side direction of the positive electrode 11, the recessed portion 37 being recessed toward a winding start end side more than both end portions 35 of the winding terminal end 32a in the short-side direction of the positive electrode 11. Providing the recessed portion 37 can relax the stress applied to the central portion of the winding terminal end 32a of the positive electrode mixture layer 32 and restrain the internal short circuit due to the damage on the separator 13 that faces the winding terminal end 32a of the positive electrode mixture layer 32.

In the present embodiment, a winding terminal end 30a of the positive electrode current collector 30 overlaps the winding terminal end 32a of the positive electrode mixture layer 32 in the thickness direction of the positive electrode 11. Specifically, the positive electrode current collector 30 has a recessed portion of the same shape as the recessed portion 37 at the same position as the recessed portion 37 in the winding terminal end 30a, and the positive electrode mixture layer 32 is formed over the entire surface in the vicinity of the winding terminal end 30a of the positive electrode current collector 30.

The negative electrode 12 includes a strip-shaped negative electrode current collector 40 and a negative electrode mixture layer 42 formed on the surface of the negative electrode current collector 40. For the negative electrode current collector 40, there may be used, for example, a foil of metal such as copper, or a film with the metal arranged on the surface thereof. The negative electrode current collector 40 has a thickness of, for example, greater than or equal to 5 µm and less than or equal to 30 µm.

The negative electrode mixture layer 42 includes, for example, a negative electrode active material and a binding agent. The negative electrode mixture layer 42 is fabricated by applying a negative electrode mixture slurry containing, for example, a negative electrode active material, a binding agent, and a solvent such as water, to both the surfaces of the negative electrode current collector 40, and then drying and rolling it.

The negative electrode active material is not particularly limited as long as it can reversibly store and release lithium ions, and typically, carbon materials such as graphite are used. Graphite may be any one of natural graphite such as flake graphite, massive graphite, and earthy graphite, and artificial graphite such as massive artificial graphite, and graphitized mesophase carbon microbeads. As the negative electrode active material, there may be used, for example, metal that alloys with Li such as Si and Sn, metal compounds containing Si, Sn or the like, and lithium titanium composite oxides. For example, silicon oxides represented by SiOₓ (x is greater or equal to 0.5 and less than or equal to 1.6), a silicon-containing material represented by Li_{2y}SiO_{(2 + y)} (0 < y < 2) and where Si particles are dispersed in a lithium silicate phase, or a silicon-containing material where Si particles are dispersed in a carbon phase may be used in combination with graphite.

The negative electrode mixture layer 42 contains, for example, graphite and a silicon-containing material as a negative electrode active material. The negative electrode 12 containing a silicon-containing material along with graphite can achieve high capacity of the battery. A content of the silicon-containing material in the negative electrode active material may be greater than or equal to 3 mass%. In this case, the effect of the present disclosure is more pronounced because the rate of expansion of the negative electrode 12 increases due to charging and discharging. An upper limit of the content of the silicon-containing material in the negative electrode active material is greater than or equal to 30 mass%, for example.

Examples of the binding agent contained in the negative electrode mixture layer 42 may include styrene-butadiene rubber (SBR), nitrile-butadiene rubber (NBR), carboxymethylcellulose (CMC) or its salts (such as CMC-Na, CMC-K, CMC-NH4, or partially neutralizing salts), polyacrylic acid (PAA) or its salts (such as PAA-Na and PAA-K, or partially neutralized salts), and polyvinyl alcohol (PVA). Any one of these materials may be used independently, or two or more of these materials may be used combinedly.

In the present embodiment, a negative electrode current collector exposed portion 44 where the negative electrode current collector 40 is exposed is formed in the vicinity of the winding terminal end and the vicinity of the winding start end on the surface of the negative electrode 12. The negative electrode current collector exposed portion 44, which is the surface of the negative electrode current collector 40 not covered with the negative electrode mixture layer 42, is provided, for example, by intermittent application in which the negative electrode mixture slurry is not applied to some region of the negative electrode current collector 40. The negative electrode current collector exposed portion 44 in the vicinity of the winding start end is connected to the negative electrode tab 20. The negative electrode current collector exposed portion 44 in the vicinity of the winding terminal end is directly in contact with the outer casing 15. The negative electrode current collector exposed portion 44 is suitably provided on both the surfaces of the negative electrode 12 so that the negative electrode current collector exposed portions 44 overlap in the thickness direction of the negative electrode 12. The negative electrode tab 20 is joined to the negative electrode current collector exposed portion 44, for example, by ultrasonic welding.

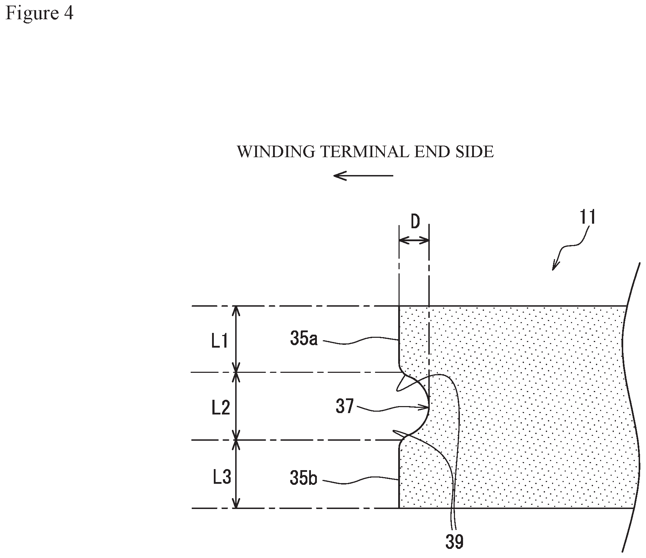

A description is now given of the recessed portion 37 provided in the winding terminal end 32a of the positive electrode mixture layer 32 with reference to FIG. 4. FIG. 4 is an enlarged view of the vicinity of a winding terminal end of the positive electrode 11 shown in FIG. 3.

The shape of the recessed portion 37 is not particularly limited and may be triangular, rectangular, or in other shapes, though the shape is preferably constituted of curves. The recessed portion 37 constituted of curves has no corners and can thereby relax the concentration of stress, thus reducing the risk of fracture of the separator 13. In the present embodiment, the recessed portion 37 is in an arc shape. Since the arc-shaped recessed portion 37 is easier to fabricate than the recessed portion 37 constituted of other curves, the productivity of the positive electrode 11 is improved.

The shape of corner portions 39, which connect the both end portions 35 and the recessed portion 37, is preferably chamfered, though it is not particularly limited thereto. The chamfered corner portions 39 have no corners and can thereby relax the concentration of stress, thus reducing the risk of fracture of the separator 13. In the present embodiment, the corner portions 39 are chamfered and rounded.

In the longitudinal direction of the positive electrode 11, a distance D between the position of the recessed portion 37 closest to the winding start end and the positions of the both end portions 35 at the winding terminal end 32a is, for example, greater than or equal to 1 mm and less than or equal to 5 mm. By setting the distance D to greater than or equal to 1 mm, the stress applied to the central portion of the winding terminal end 32a of the positive electrode mixture layer 32 can be reduced. In addition, by setting the distance D to less than or equal to 5 mm, a significant decrease in battery capacity can be suppressed.

In the short-side direction of the positive electrode 11, a length L1 of one end portion 35a, a length L2 of the recessed portion 37, and a length L3 of the other end portion 35b satisfy the relationship of, for example, 50% ≤ (L1 + L3)/(L1 + L2 + L3) ≤ 75%. Here, the boundary between L1 and L2 and the boundary between L2 and L3 are set to midpoints of the corner portions 39.

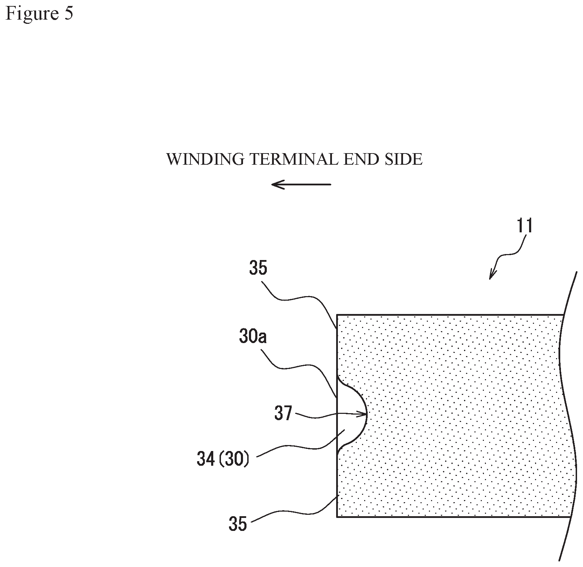

A description is now given of another embodiment of the positive electrode 11 with reference to FIG. 5. FIG. 5 is a view corresponding to FIG. 4 in another example of the embodiment.

The winding terminal end 30a of the positive electrode current collector 30 is substantially parallel to the short-side direction of the positive electrode 11, and overlaps the both end portions 35 of the winding terminal end 32a of the positive electrode mixture layer 32 in the thickness direction of the positive electrode 11. In addition, the positive electrode 11 has a positive electrode current collector exposed portion 34 where the positive electrode current collector 30 is exposed in the range surrounded with the winding terminal end 30a of the positive electrode current collector 30 and the recessed portion 37. In other words, in the present embodiment, while the winding terminal end 30a of the positive electrode current collector 30 does not have a recessed portion, the winding terminal end 32a of the positive electrode mixture layer 32 has the recessed portion 37. Accordingly, the positive electrode current collector 30 is exposed in the range surrounded with the winding terminal end 30a of the positive electrode current collector 30 and the recessed portion 37. In this case, as in the embodiment shown in FIG. 4, the stress applied to the central portion of the winding terminal end of the positive electrode 11 can also be relaxed, and the internal short circuit due to the damage on the separator 13 can be restrained. Here, the positive electrode current collector exposed portion 34 may be stretched so that the winding terminal end 30a of the positive electrode current collector 30 is located closer to the winding terminal side than the both end portions 35 of the positive electrode mixture layer 32. Specifically, the positive electrode current collector exposed portion 34 may be formed in the range surrounded with the winding terminal end of the positive electrode 11 and the winding terminal end 30a of the positive electrode mixture layer 32.

As described in the foregoing, according to the non-aqueous electrolyte secondary battery in the present disclosure, the stress applied to the central portion of the winding terminal end of the positive electrode mixture layer can be relieved, which makes it possible to restrain an internal short circuit caused by damage on the separator that faces the winding terminal end of the positive electrode mixture layer.

The present disclosure is further described with the embodiment described below.

### Configuration 1

A non-aqueous electrolyte secondary battery, comprising: a wound electrode assembly having a strip-shaped positive electrode and negative electrode wound with a separator in between; and an outer casing that houses the electrode assembly, in which
the positive electrode includes a positive electrode current collector and a positive electrode mixture layer formed on a surface of the positive electrode current collector,
the positive electrode mixture layer has a recessed portion in a central portion of a winding terminal end in a short-side direction of the positive electrode, the recessed portion being recessed toward a winding start end side more than both end portions of the winding terminal end in the short-side direction of the positive electrode.

### Configuration 2

The non-aqueous electrolyte secondary battery according to Configuration 1, in which the recessed portion is in an arc shape.

### Configuration 3

The non-aqueous electrolyte secondary battery according to Configuration 1 or 2, in which in a longitudinal direction of the positive electrode, a distance between a position of the recessed portion closest to the winding start end and positions of the both end portions is greater than or equal to 1 mm and less than or equal to 5 mm.

### Configuration 4

The non-aqueous electrolyte secondary battery according to any one of Configurations 1 to 3, in which a winding terminal end of the positive electrode current collector overlaps the winding terminal end of the positive electrode mixture layer in a thickness direction of the positive electrode.

### Configuration 5

The non-aqueous electrolyte secondary battery according to any one of Configurations 1 to 3, in which a winding terminal end of the positive electrode current collector overlaps the both end portions of the winding terminal end of the positive electrode mixture layer in a thickness direction of the positive electrode, and
the positive electrode has a positive electrode current collector exposed portion where the positive electrode current collector is exposed in a range surrounded with the winding terminal end of the positive electrode current collector and the recessed portion.

### Configuration 6

The non-aqueous electrolyte secondary battery according to any one of Configurations 1 to 5, in which the negative electrode contains graphite and a silicon-containing material as a negative electrode active material, and a content of the silicon-containing material in the negative electrode active material is greater than or equal to 3 mass%.

### REFERENCE SIGNS LIST

10 Secondary battery, 11 Positive electrode, 12 Negative electrode, 13 Separator, 14 Electrode assembly, 15 Outer casing, 16 Sealing assembly, 17, 18 Insulating plate, 19 Positive electrode tab, 20 Negative electrode tab, 21 Grooved portion, 22 Filter, 23 Lower vent member, 24 Insulating member, 25 Upper vent member, 26 Cap, 26a Opening portion, 27 Gasket, 30 Positive electrode current collector, 30a Winding terminal end, 32 Positive electrode mixture layer, 32a Winding terminal end, 34 Positive electrode current collector exposed portion, 35 both end portions, 35a one end portion, 35b Other end portion, 37 Recessed portion, 39 Corner portion

## Claims

1. A non-aqueous electrolyte secondary battery, comprising: a wound electrode assembly having a strip-shaped positive electrode and negative electrode wound with a separator in between; and an outer casing that houses the electrode assembly, wherein
the positive electrode includes a positive electrode current collector and a positive electrode mixture layer formed on a surface of the positive electrode current collector,
the positive electrode mixture layer has a recessed portion in a central portion of a winding terminal end in a short-side direction of the positive electrode, the recessed portion being recessed toward a winding start end side more than both end portions of the winding terminal end in the short-side direction of the positive electrode.

2. The non-aqueous electrolyte secondary battery according to Claim 1, wherein the recessed portion is in an arc shape.

3. The non-aqueous electrolyte secondary battery according to Claim 1, wherein in a longitudinal direction of the positive electrode, a distance between a position of the recessed portion closest to the winding start end and positions of the both end portions is greater than or equal to 1 mm and less than or equal to 5 mm.

4. The non-aqueous electrolyte secondary battery according to Claim 1, wherein a winding terminal end of the positive electrode current collector overlaps the winding terminal end of the positive electrode mixture layer in a thickness direction of the positive electrode.

5. The non-aqueous electrolyte secondary battery according to Claim 1, wherein
a winding terminal end of the positive electrode current collector overlaps the both end portions of the winding terminal end of the positive electrode mixture layer in a thickness direction of the positive electrode, and
the positive electrode has a positive electrode current collector exposed portion where the positive electrode current collector is exposed in a range surrounded with the winding terminal end of the positive electrode current collector and the recessed portion.

6. The non-aqueous electrolyte secondary battery according to Claim 1, wherein
the negative electrode contains graphite and a silicon-containing material as a negative electrode active material, and
a content of the silicon-containing material in the negative electrode active material is greater than or equal to 3 mass%.
